# FASCICULE DE BREVET EUROPEEN

(11) **EP 3 921 269 B1**
(45) Date de publication et mention de la délivrance du brevet: **16.11.2022**
(21) Numéro de dépôt: 20705440.4
(22) Date de dépôt: 27.01.2020
(51) Int. Cl.: B66F 9/075, B66F 9/22

(54) **CHARIOT À FOURCHES EMBARQUABLE SUR UN VÉHICULE PORTEUR**
AUF EINEM TRÄGERFAHRZEUG MONTIERTER GABELSTAPLER
FORKLIFT TRUCK MOUNTED ON A CARRIER VEHICLE

(30) Priorité: 05.02.2019 FR 1901109
(43) Date de publication de la demande: 15.12.2021
(73) Titulaire: MANITOU BF, 44150 Ancenis (FR)
(72) Inventeur: HERSANT, Pierre, 44150 ANCENIS (FR)
(74) Mandataire: Ipsilon
(86) Numéro de dépôt international: PCT/FR2020/050118
(87) Numéro de publication internationale: WO 2020/161409

(56) Documents cités:
- FR-A1- 2 298 454
- JP-A- H07 291 592
- JP-A- 2011 225 287
- JP-U- S 524 677

## Description

La présente invention concerne un chariot à fourches embarquable sur un véhicule porteur, de préférence à l'arrière dudit véhicule.

Elle concerne plus particulièrement un chariot à fourches comprenant un châssis, des fourches pour la manutention de charge et le couplage du chariot à un véhicule porteur, des moyens de liaison des fourches au châssis, lesdits moyens de liaison comprenant au moins un vérin de levage d' entraînement en déplacement relatif des fourches et du châssis dans le sens d'un rapprochement et d'un écartement l'un de l'autre pour permettre, dans un mode de fonctionnement dit de manutention, dans lequel les fourches sont montées libres en déplacement en monte et baisse par rapport au sol, une élévation des fourches, et dans un mode de fonctionnement dit de transport, dans lequel les fourches sont en position haute et immobilisées en déplacement en monte et baisse par rapport au sol, une élévation du châssis, le ou chaque vérin de levage comprenant au moins un corps et une tige de piston divisant le corps en deux chambres, ce vérin de levage étant un vérin de levage double effet dont chaque chambre est équipée d'une conduite de fluide de raccordement de la chambre à une source hydraulique comprenant une pompe et un réservoir à pression atmosphérique via un distributeur pour une alimentation en fluide de l'une ou l'autre des chambres .

Un chariot à fourches de ce type est notamment décrit dans le brevet FR2298454. De même, le document JPS524677 décrit un chariot à fourches selon le préambule de la revendication 1. Les solutions mises en œuvre actuellement génèrent une surconsommation d'énergie résultant de pertes de charge importantes et de pressions élevées de pilotage du vérin de levage. Cette surconsommation d'énergie nuit aux autres fonctions du chariot et en particulier à la fonction d'avancement du chariot.

Un but de l'invention est de proposer un chariot à fourches du type précité dont la conception permet une réduction de la consommation d'énergie.

A cet effet, l'invention a pour objet un chariot à fourches embarquable sur un véhicule porteur, ledit chariot comprenant un châssis, des fourches pour la manutention de charge et le couplage du chariot à un véhicule porteur, des moyens de liaison des fourches au châssis, lesdits moyens de liaison comprenant au moins un vérin de levage d' entraînement en déplacement relatif des fourches et du châssis dans le sens d'un rapprochement et d'un écartement l'un de l'autre pour permettre, dans un mode de fonctionnement dit de manutention, dans lequel les fourches sont montées libres en déplacement en monte et baisse par rapport au sol, une élévation des fourches, et dans un mode de fonctionnement dit de transport, dans lequel les fourches sont en position haute et immobilisées en déplacement en monte et baisse par rapport au sol, une élévation du châssis, le ou chaque vérin de levage comprenant au moins un corps et une tige de piston divisant le corps en deux chambres, ce vérin de levage étant un vérin de levage double effet dont chaque chambre est équipée d'une conduite de fluide de raccordement de la chambre à une source hydraulique comprenant une pompe et un réservoir via un distributeur pour permettre une alimentation en fluide de l'une ou l'autre des chambres, caractérisé en ce que, dans le mode de fonctionnement dit de manutention, les fourches forment, sous l'effet de leur poids, un élément menant d'actionnement du ou de chaque vérin de levage pour le passage des fourches de la position haute à la position basse et en ce que, pour le ou chaque vérin de levage, les conduites de fluide de raccordement des chambres du vérin de levage à la source hydraulique sont reliées l'une à l'autre par une liaison fluidique pour permettre un transfert de fluide depuis l'une des chambres en direction de l'autre chambre du vérin, cette liaison fluidique étant équipée d'un organe d'obturation monté mobile entre une position fermée et une position ouverte de la liaison fluidique, cet organe d'obturation étant en position fermée au moins en mode de fonctionnement de transport à l'état entraîné du châssis dans le sens d'une élévation du châssis.

L'utilisation, en mode de fonctionnement de manutention, du poids des fourches comme élément menant pour permettre la commande de l'abaissement des fourches permet de s'affranchir d'une pression de fluide élevée dans la chambre d'admission de fluide du vérin de levage. Ainsi, la commande de l'abaissement des fourches peut être obtenue y compris à l'état arrêté de la pompe ou avec une pression du fluide de la chambre à l'échappement supérieure à la pression du fluide de la chambre d'admission de fluide du vérin de levage. La présence d'une liaison fluidique obturable entre les conduites permet de limiter les phénomènes de cavitation en mode de fonctionnement de manutention à l'état entraîné en déplacement des fourches dans le sens d'un abaissement sous l'effet de leur poids sans nuire aux possibilités d'élévation du châssis en mode de fonctionnement de transport.

Selon un mode de réalisation de l'invention, l'organe d'obturation de la liaison fluidique entre les conduites est en position ouverte en mode de fonctionnement de manutention à l'état entraîné des fourches dans le sens d'un abaissement des fourches. L'ouverture de la liaison permet notamment de limiter les problèmes de cavitation du vérin de levage.

Selon un mode de réalisation de l'invention, l'une des chambres dite chambre d'abaissement des fourches du ou de chaque vérin de levage qui est configurée pour, en mode de fonctionnement de manutention, être alimentée en fluide à partir de l'autre chambre dite chambre de levage des fourches via la liaison fluidique entre les conduites à l'état entraîné des fourches dans le sens d'un abaissement des fourches forme, en mode de fonctionnement de transport, la chambre dudit vérin de levage alimentée en fluide à l'état entraîné du châssis dans le sens d'un levage du châssis.

Selon un mode de réalisation de l'invention, l'une des chambres dite chambre de levage des fourches du ou de chaque vérin de levage qui est configurée pour, en mode de fonctionnement de manutention, être alimentée en fluide à l'état entraîné des fourches dans le sens d'un levage des fourches forme, en mode de fonctionnement de transport, la chambre dudit vérin de levage alimentée en fluide à l'état entraîné du châssis dans le sens d'un abaissement du châssis.

Selon un mode de réalisation de l'invention, la liaison fluidique entre les conduites est disposée sur la portion des conduites s'étendant entre le distributeur et le vérin de levage.

Selon un mode de réalisation de l'invention, la liaison fluidique entres les conduites est munie d'une ligne de délestage équipée dans sa zone de raccordement à la liaison fluidique d'une vanne sensible à la pression apte à passer de la position fermée à la position ouverte de la ligne de délestage en fonction de la pression régnant sur la liaison fluidique entre les conduites.

Selon un mode de réalisation de l'invention, la conduite de circulation de fluide équipant la chambre du vérin de levage dite chambre d'abaissement des fourches à l'échappement en mode de fonctionnement de manutention à l'état entraîné en déplacement des fourches pour le passage des fourches d'une position basse à une position haute est munie d'un organe de fermeture de la conduite sensible à la pression du fluide de la conduite de circulation de fluide de l'autre chambre dite chambre de levage des fourches du vérin de levage, ledit organe de fermeture étant configuré pour passer de la position fermée à la position ouverte de la conduite lorsque la pression sur la conduite de la chambre de levage des fourches du vérin de levage est supérieure à une valeur prédéterminée. Il en résulte la possibilité d'une vidange pilotée de la chambre d'abaissement des fourches.

Selon un mode de réalisation de l'invention, l'organe de fermeture de la conduite est monté en parallèle d'un clapet anti-retour. Ce clapet anti-retour permet une alimentation en fluide de la chambre d'abaissement des fourches du vérin de levage lorsque la pression sur la conduite de la chambre de levage des fourches du vérin est inférieure à une valeur prédéterminée. Cette alimentation est en particulier utile en mode de fonctionnement de transport à l'état entraîné en déplacement du châssis dans le sens d'une élévation, c'est-à-dire dans le sens d'un rapprochement des fourches du châssis, elles-mêmes en position haute.

Selon un mode de réalisation de l'invention, l'organe d'obturation de la liaison fluidique entre les conduites est un organe d'obturation à commande manuelle actionnable par le conducteur du chariot.

Selon un mode de réalisation de l'invention, l'organe d'obturation de la liaison fluidique entre les conduites est une électrovalve de préférence normalement ouverte.

### Brève description des dessins

L'invention sera bien comprise à la lecture de la description suivante d'exemples de réalisation, en référence aux dessins annexés dans lesquels :
[Fig. 1] représente une vue schématique de deux chariots à fourche pour illustrer le passage des fourches de la position basse à la position haute en mode de fonctionnement de manutention,
[Fig. 2] représente le circuit hydraulique correspondant à l'opération décrite à la figure 1,
[Fig. 3] représente une vue schématique de deux chariots à fourche pour illustrer le passage du châssis d'une position écartée des fourches à une position rapprochée des fourches en mode de fonctionnement de transport,
[Fig. 4] représente le circuit hydraulique correspondant à l'opération décrite à la figure 3,
[Fig. 5] représente une vue schématique de deux chariots à fourche pour illustrer le passage du châssis d'une position rapprochée des fourches à une position écartée des fourches en mode de fonctionnement de transport,

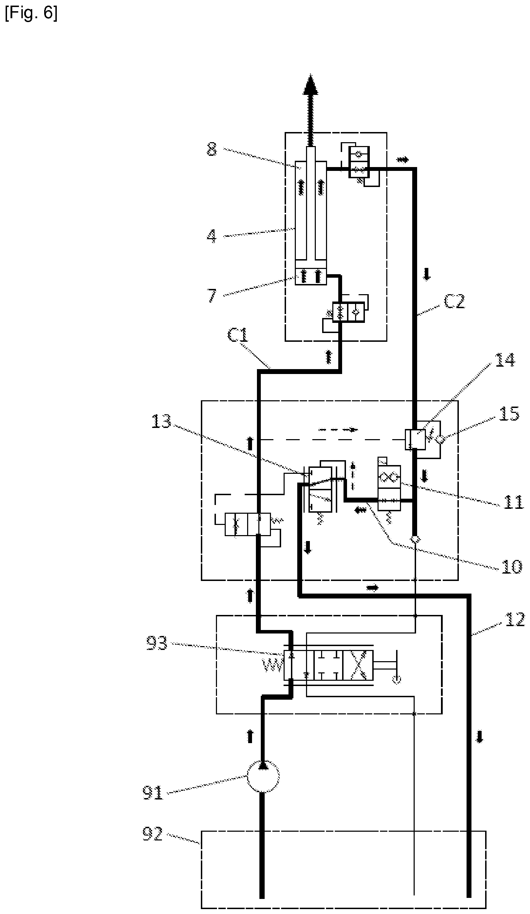

[Fig. 6] représente le circuit hydraulique correspondant à l'opération décrite à la figure 5,
[Fig. 7] représente une vue schématique de deux chariots à fourche pour illustrer le passage des fourches de la position haute à la position basse en mode de fonctionnement de manutention,
[Fig. 8] représente le circuit hydraulique correspondant à l'opération décrite à la figure 7.

Comme mentionné ci-dessus, l'invention concerne un chariot 1 élévateur à fourches 2 embarquable sur un véhicule 20 porteur, tel qu'un camion, en particulier à l'arrière du véhicule 20 porteur, pour être ainsi transporté après avoir été par exemple utilisé pour le chargement et le déchargement du véhicule 20 porteur.

L'arrière du véhicule 20 porteur comprend généralement, pour la réception d'un tel chariot 1 à fourches, deux fourreaux longitudinaux à l'intérieur desquels les fourches 2 du chariot 1 élévateur peuvent être insérées en position haute, pour permettre ensuite, par actionnement des fourches du chariot dans le sens d'un abaissement, un soulèvement du châssis 16 du chariot 1 élévateur dans le sens d'un rapprochement du châssis 16 des fourches 2 insérées partiellement dans les fourreaux. Une fois le soulèvement du châssis 16 achevé, un support coulissant du véhicule 20 porteur peut être disposé partiellement en saillie de l'arrière du véhicule 20 porteur pour former un support de réception du chariot 1 élévateur à fourches. Des chaînes peuvent être utilisées en substitution ou en complément du support coulissant. Une combinaison de crochets et d'axes sur le chariot 1 élévateur et sur le véhicule 20 porteur peut également se substituer au support de réception.

Un tel chariot 1 à fourches peut être un chariot 1 élévateur à conducteur embarqué prenant place dans une cabine de pilotage du chariot 1. Un tel chariot 1 à fourches peut être un chariot 1 élévateur à conducteur accompagnant exempt de cabine de pilotage. Un poste de conduite est prévu. Ce chariot 1 qui comprend un châssis 16 roulant, des fourches 2, des moyens 3 de liaison des fourches 2 au châssis 16 comprenant au moins un vérin 4 de levage d'entraînement en déplacement relatif des fourches 2 et du châssis 16 dans le sens d'un rapprochement et d'un écartement l'un de l'autre pour permettre, dans un mode de fonctionnement dit de manutention dans lequel les fourches 2 sont montées libres en déplacement en monte et baisse par rapport au sol, une élévation des fourches 2, et dans un mode de fonctionnement dit de transport dans lequel les fourches 2 sont en position haute et immobilisées en déplacement et monte et baisse par rapport au sol une élévation du châssis 16 est parfaitement connu. Il ne sera donc pas décrit en détail pour la partie relative à la liaison des fourches au châssis via le, au moins un, vérin 4 de levage, cette liaison pouvant affecter un grand nombre de formes. De même l'immobilisation en monte et baisse des fourches 2 en position haute en mode de fonctionnement de transport, qui peut s'opérer comme décrit ci-dessus par insertion des fourches 2 dans des fourreaux du véhicule 20 porteur ne sera pas décrite plus en détail.

Il doit être noté que la description ci-après va être faite avec un vérin 4 de levage, mais le chariot 1 à fourches pourrait, de manière équivalente, comprendre une paire de deux vérins de levage identiques montés en parallèle sur le circuit de commande qui va être décrit ci-après, et travaillant conjointement en synchronisme, sans sortir du cadre de l'invention. Pour cette raison, on entendra par vérin 4 de levage aussi bien un vérin unique qu'une paire de vérins.

Ce vérin 4 de levage qui s'étend entre les fourches 2 et le châssis 16 comprend un corps 5 et une tige 6 de piston divisant le corps 5 en deux chambres représentées en 7 et 8 aux figures. Généralement, et comme représenté, le corps 5 du vérin 4 de levage est couplé au châssis 16 et la tige 6 du vérin 4 aux fourches 2. La mise en extension du vérin provoque, dans le mode de fonctionnement de manutention, l'élévation des fourches 2. Inversement, la rétraction du vérin 4 de levage provoque, en mode de fonctionnement de manutention, l'abaissement des fourches 2 du chariot 1 à fourches.

Ces fourches 2 sont donc, en mode de fonctionnement de manutention, montées mobiles entre une position basse et une position haute.

Ce vérin 4 de levage est un vérin double effet, car chaque chambre 7, 8 du vérin peut être alimentée en fluide hydraulique à partir d'une source hydraulique 9. Dans les exemples représentés, la source hydraulique 9 comprend une pompe 91 hydraulique développant de la haute pression, cette pompe hydraulique pouvant par exemple être actionnée par un moteur thermique non représenté.

Cette source hydraulique 9 comprend encore un réservoir 92 à pression atmosphérique. Au moins un distributeur 93 est interposé entre la pompe 91 de la source hydraulique 9 et chacune des chambres 7, 8 du vérin 4 de levage. La chambre 7 appelée par la suite chambre 7 de levage des fourches forme ici la grande chambre du vérin 4 de levage disposée côté cylindre du vérin 4 de levage, tandis que la chambre 8 appelée par la suite chambre 8 d'abaissement des fourches est ici la petite chambre du vérin 4 de levage, c'est-à-dire celle disposée côté tige de piston.

La chambre 7 de levage des fourches, appelée ainsi car elle forme la chambre d'admission de fluide du vérin 4 de levage à l'état entraîné des fourches dans le sens d'une élévation dans le mode de fonctionnement de manutention, est reliable à la pompe 4 de la source 9 hydraulique via le distributeur 93, par une conduite de circulation de fluide représentée en C1 aux figures, tandis que la chambre 8 d'abaissement des fourches, appelée ainsi car elle forme la chambre d'admission de fluide du vérin 4 de levage à l'état entraîné des fourches dans le sens d'un abaissement dans le mode de fonctionnement de manutention, est reliable à la pompe 91 de la sources hydraulique 9 via le distributeur 93 hydraulique par une conduite de circulation de fluide représentée en C2 aux figures.

De manière caractéristique à l'invention dans le mode de fonctionnement dit de manutention dans lequel les fourches 2 sont montées libres en déplacement en monte et baisse par rapport au sol, les fourches 2 forment, sous l'effet de leur poids, un élément menant d'actionnement du vérin 4 de levage pour le passage des fourches 2 de la position haute à la position basse.

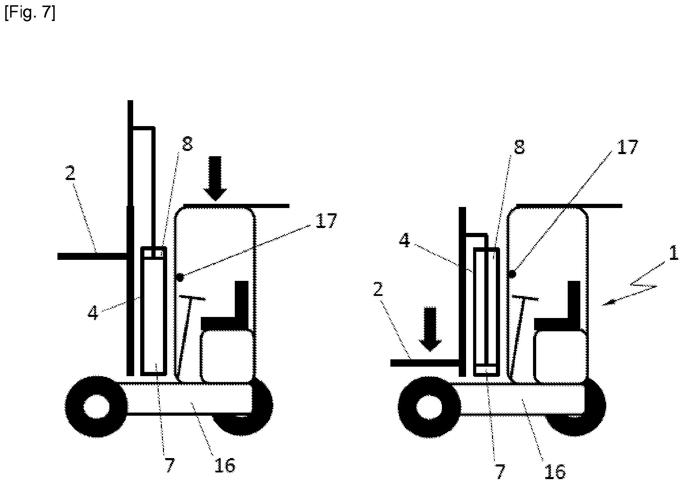

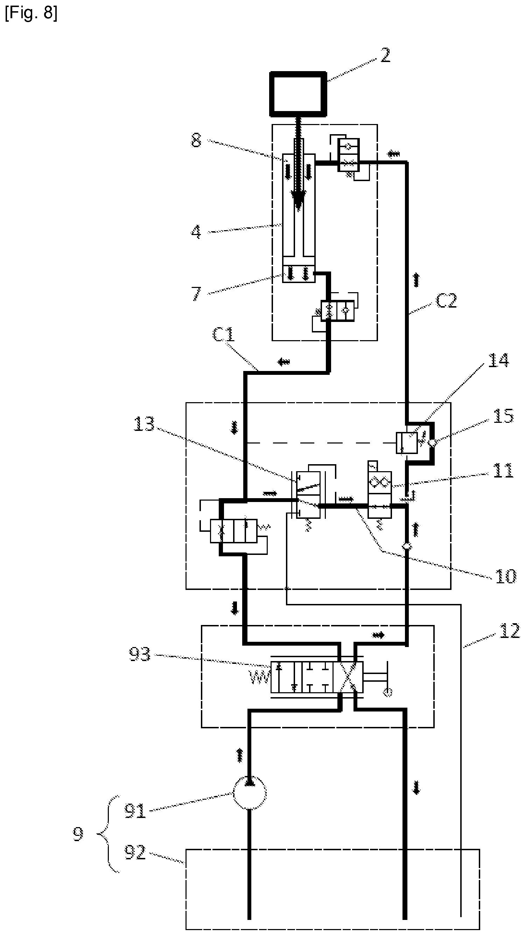

Dans cette configuration conforme à celle représentée aux figures 7 et 8, on note que les conduites C1 et C2 de fluide de raccordement des chambres 7 et 8 du vérin 4 de levage à la source hydraulique 9 sont reliées l'une à l'autre par une liaison 10 fluidique pour permettre un transfert de fluide depuis l'une des chambres en direction de l'autre chambre du vérin. Cette liaison 10 fluidique permet un gavage de la chambre 8 d'abaissement des fourches et évite les phénomènes dits de cavitation.

Cette liaison 10 fluidique entre les conduits C1 et C2 est disposée sur la portion des conduites C1 et C2 s'étendant entre les distributeurs 93 et le vérin 4 de levage. Ainsi, dans le mode de fonctionnement de manutention, à l'état entraîné des fourches dans le sens d'un abaissement, la pression régnant sur la conduite C2 d'alimentation en fluide de la chambre d'abaissement des fourches peut être inférieure à la pression régnant sur la conduite C1 de vidange de la chambre 7 de levage des fourches.

Les fourches en tant qu'éléments menants peuvent, dans ce mode de fonctionnement de manutention, passer de la position haute à la position basse, y compris à l'état arrêté de la pompe 91.

Si nécessaire, la pompe 91 de la source 9 hydraulique peut être actionnée dans ce mode de fonctionnement de manutention pour venir compléter l'alimentation en fluide de la chambre 8 d'abaissement des fourches. Toutefois, la présence de la liaison 10 fluidique et le fait que la fourche soit utilisée comme élément menant minimisent le recours à la pompe 91. Il en résulte une économie de puissance qui peut être utilisée à d'autres fins, ainsi qu'une économie d'énergie.

La liaison 10 fluidique est équipée d'un organe 11 d'obturation monté, par l'intermédiaire d'un organe de commande actionnable par le conducteur du chariot, mobile entre une position fermée et une position ouverte de la liaison.

L'organe 11 d'obturation de la liaison 10 fluidique entre les conduites C1, C2 est en position ouverte en mode de fonctionnement de manutention à l'état entraîné des fourches 2 dans le sens d'un abaissement des fourches 2 pour permettre un transfert de fluide entre lesdites chambres 7, 8 du vérin 4 de levage.

Cet organe 11 d'obturation de la liaison 10 fluidique entre les conduites C1, C2 est une électrovalve de préférence normalement ouverte.

Cet organe 11 d'obturation de la liaison 10 fluidique entre les conduites C1, C2 est ici un organe 11 d'obturation à commande 17 manuelle actionnable par le conducteur du chariot 1. En variante, l'organe 11 d'obturation de la liaison 10 fluidique peut être à commande automatique, comme cela sera décrit ci-après.

La liaison 10 fluidique entre les conduites C1, C2 est munie d'une ligne 12 de délestage équipée, dans sa zone de raccordement à la liaison 10, d'une vanne 13 sensible à la pression, apte à passer de la position fermée à la position ouverte de la ligne 12 de délestage en fonction de la pression régnant sur la liaison 10 fluidique entre les conduites C1 et C2.

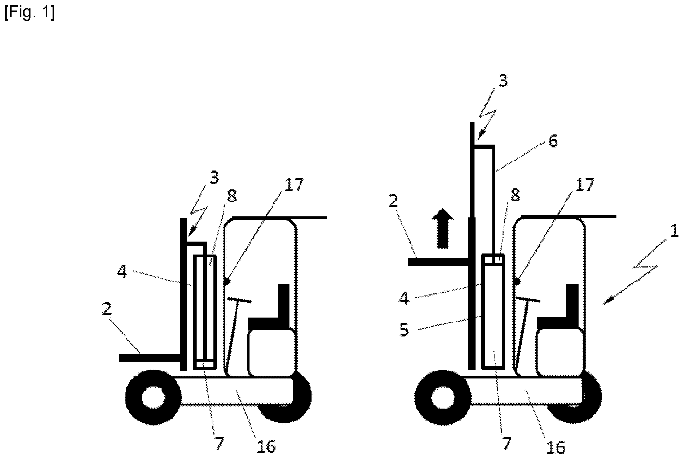

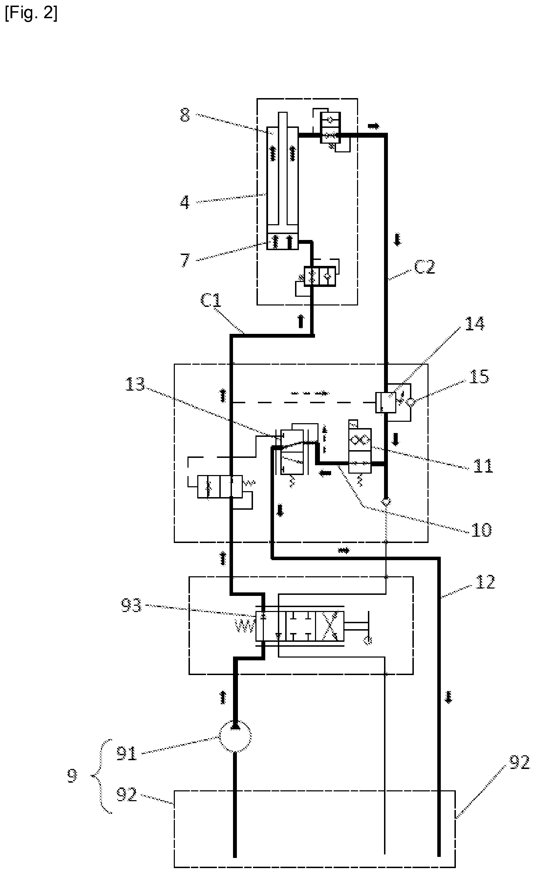

Cette vanne 13 est disposée sur la liaison 10 fluidique entre la conduite C1 de raccordement de la chambre 7 de levage des fourches à la source hydraulique 9 et l'organe 11 d'obturation de ladite liaison 10 fluidique à commande 17 manuelle ou automatique. Cette ligne 12 de délestage est utilisée en mode de fonctionnement de manutention, à l'état entraîné des fourches dans le sens d'un levage des fourches, comme illustré aux figures 1 et 2. On note que la conduite C2 de circulation de fluide, équipant la chambre 8 du vérin 4 de levage dite chambre d'abaissement des fourches 2 à l'échappement en mode de fonctionnement de manutention à l'état entraîné en déplacement des fourches 2 pour le passage des fourches d'une position basse à une position haute, est munie d'un organe 14 de fermeture de la conduite C2 sensible à la pression du fluide de la conduite C1 de circulation de fluide de l'autre chambre 7 dite chambre de levage des fourches 2 du vérin 4 de levage. Cet organe 14 de fermeture est configuré pour passer de la position fermée à la position ouverte de la conduite C2 lorsque la pression sur la conduite C1 de la chambre 7 de levage des fourches 2 du vérin 4 de levage est supérieure à une valeur prédéterminée en mode de fonctionnement de manutention, à l'état entraîné des fourches dans le sens d'une élévation comme illustré aux figures 1 et 2 pour permettre une vidange pilotée de la chambre 8 d'abaissement des fourches.

L'organe 14 de fermeture de la conduite C2 est monté en parallèle d'un clapet 15 anti-retour. La présence d'un tel clapet 15 anti-retour permet une alimentation en fluide de la chambre 8 d'abaissement des fourches du vérin de levage, y compris lorsque la pression sur la conduite de la chambre 7 de levage des fourches du vérin est inférieure à une valeur prédéterminée. Le rôle de ce clapet 15 anti-retour sera décrit ci-après.

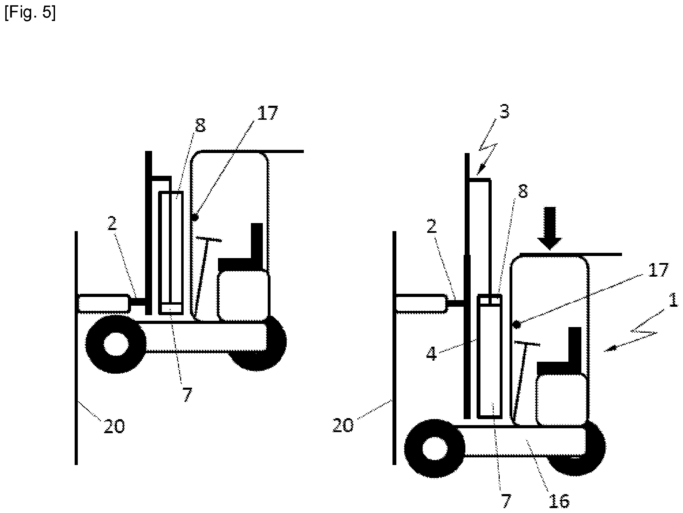

Comme mentionné ci-dessus, le chariot 1 à fourches comprend, en sus du mode de fonctionnement de manutention tel que décrit ci-dessus qui permet l'élévation ou l'abaissement des fourches 2 pour la manutention de charges à l'aide des fourches, un mode de fonctionnement de transport dans lequel les fourches 2 sont en position haute et immobilisées en déplacement en monte et baisse par rapport au sol, pour permettre une élévation du châssis 16 et son embarquement sur un véhicule 20 porteur partiellement représenté aux figures 1, 3 et 5. Ainsi, l'une des chambres dite chambre 8 d'abaissement des fourches 2 du vérin 4 de levage qui est configurée pour, en mode de fonctionnement de manutention, être alimentée en fluide à partir de l'autre chambre dite chambre 7 de levage des fourches via la liaison 10 fluidique entre les conduites C1, C2 à l'état entraîné des fourches 2 dans le sens d'un abaissement des fourches 2 forme, en mode de fonctionnement de transport, la chambre du vérin 4 de levage alimentée en fluide par la source 9 hydraulique à l'état entraîné du châssis 16 dans le sens d'un levage du châssis 16.

De même, la chambre 7 dite chambre 7 de levage des fourches du vérin 4 de levage qui est configurée pour, en mode de fonctionnement de manutention, être alimentée en fluide à l'état entraîné des fourches 2 dans le sens d'un levage des fourches 2 forme, en mode de fonctionnement de transport, la chambre dudit vérin 4 de levage alimentée en fluide à l'état entraîné du châssis 16 dans le sens d'un abaissement du châssis 16.

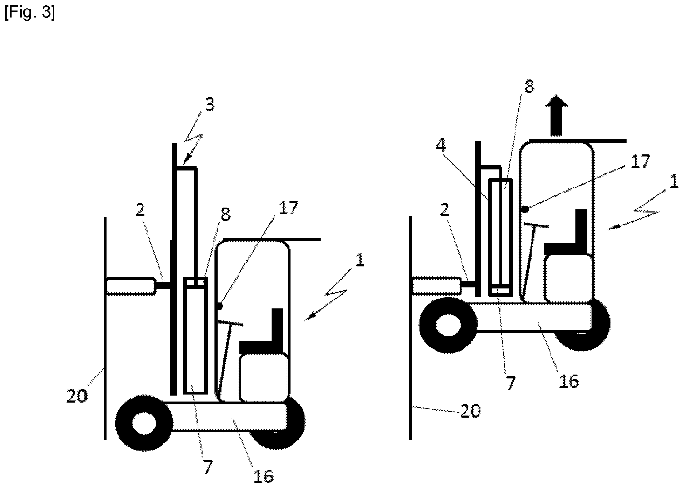

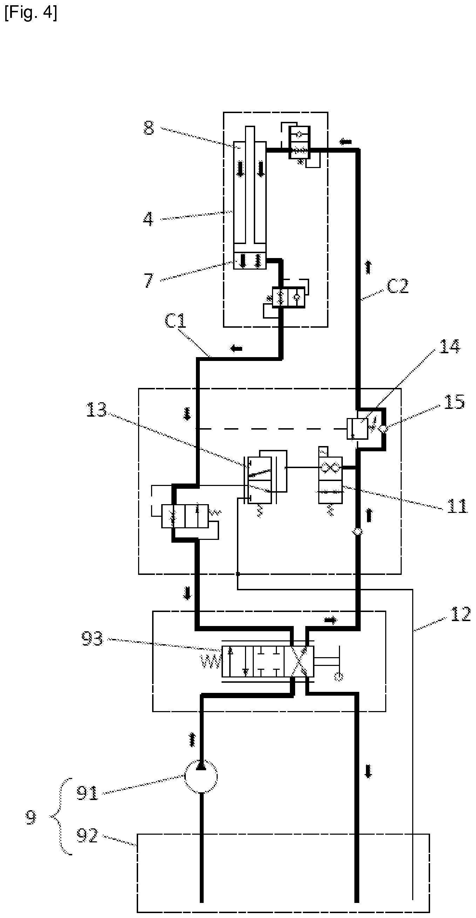

De manière caractéristique à l'invention, l'organe 11 d'obturation de liaison 10 fluidique entre les conduites C1 et C2 est en position fermée, en mode de fonctionnement de transport, à l'état entraîné du châssis 16 dans le sens d'une élévation du châssis 16, comme illustré aux figures 3 et 4. Cela évite que l'huile alimentant la chambre 8 dite d'abaissement de fourches puisse commander la vanne 13 sensible à la pression à la position ouverte de la liaison 10 fluidique vers la ligne délestage 12 et interdise l'élévation du châssis 16.

On note également que dans ce mode de fonctionnement de transport, à l'état entraîné du châssis 16 dans le sens d'une élévation, le fluide d'alimentation de la chambre 8 d'abaissement des fourches et par suite, d'élévation du châssis 16 passe au niveau de la conduite C2 par le clapet 15 anti-retour monté en parallèle de l'organe 14 de fermeture de la conduite C2 sensible à la pression et décrit ci-dessus.

Pour permettre l'actionnement de l'organe 11 d'obturation de la liaison 10 fluidique entre les conduites C1 et C2 et, par suite, la fermeture de la liaison 10 fluidique, il peut être prévu une commande 17 manuelle disposée au tableau de bord du chariot 1 et actionnable par le conducteur de l'engin, comme représenté. Ainsi, le conducteur de l'engin doit, en mode de fonctionnement de transport, pour pouvoir commander le vérin 4 de levage dans le sens d'une élévation du châssis 16, actionner cette commande 17 formée par exemple par un bouton poussoir qui, lui, commande l'alimentation de l'électrovalve formant l'organe 11 d'obturation de la liaison 10 fluidique dans le sens d'une fermeture de ladite liaison 10 fluidique. Cette commande manuelle peut être remplacée par une commande automatique, grâce par exemple à la présence d'un ou plusieurs capteurs détectant l'immobilisation des fourches et la commande d'abaissement des fourches correspondant à une élévation du châssis.

En pratique, la commande des fourches dans le sens d'une élévation ou d'un abaissement s'opère classiquement à l'aide d'un levier de commande disposé dans la cabine de pilotage ou au niveau du poste de conduite. Le conducteur de l'engin a juste à actionner la commande 17 lorsqu'il veut commuter en mode de fonctionnement de transport et entraîner en déplacement les fourches dans le sens d'une élévation du châssis 16, une fois les fourches 2 immobilisées dans les fourreaux du véhicule porteur. Cette commande 17 peut se désactiver automatiquement lorsque le chariot 1 élévateur à fourches 2 est dans sa position finale de transport sur le véhicule 20 porteur.

## Revendications

1. Chariot (1) à fourches (2) embarquable sur un véhicule (20) porteur, ledit chariot (1) comprenant un châssis (16), des fourches (2) pour la manutention de charge et le couplage du chariot (1) à un véhicule (20) porteur, des moyens (3) de liaison des fourches (2) au châssis (16), lesdits moyens (3) de liaison comprenant au moins un vérin (4) de levage d' entraînement en déplacement relatif des fourches (2) et du châssis (16) dans le sens d'un rapprochement et d'un écartement l'un de l'autre pour permettre, dans un mode de fonctionnement dit de manutention, dans lequel les fourches (2) sont montées libres en déplacement en monte et baisse par rapport au sol, une élévation des fourches (2), et dans un mode de fonctionnement dit de transport, dans lequel les fourches (2) sont en position haute et immobilisées en déplacement en monte et baisse par rapport au sol, une élévation du châssis (16), le ou chaque vérin (4) de levage comprenant au moins un corps (5) et une tige (6) de piston divisant le corps (5) en deux chambres (7, 8), ce vérin (4) de levage étant un vérin de levage double effet dont chaque chambre (7 ; 8) est équipée d'une conduite (C1, C2) de fluide de raccordement de la chambre (7 ; 8) à une source hydraulique (9) comprenant une pompe (91) et un réservoir (92) via un distributeur (93) pour permettre une alimentation en fluide de l'une ou l'autre des chambres (7, 8), **caractérisé en ce que**, dans le mode de fonctionnement dit de manutention, les fourches (2) forment, sous l'effet de leur poids, un élément menant d'actionnement du ou de chaque vérin (4) de levage pour le passage des fourches (2) de la position haute à la position basse et **en ce que**, pour le ou chaque vérin (4) de levage, les conduites (C1, C2) de fluide de raccordement des chambres (7, 8) du vérin (4) de levage à la source hydraulique (9) sont reliées l'une à l'autre par une liaison (10) fluidique pour permettre un transfert de fluide depuis l'une (7) des chambres (7, 8) en direction de l'autre chambre (8) du vérin, cette liaison (10) fluidique étant équipée d'un organe (11) d'obturation monté mobile entre une position fermée et une position ouverte de la liaison (10) fluidique, cet organe (11) d'obturation étant en position fermée au moins en mode de fonctionnement de transport à l'état entraîné du châssis (16) dans le sens d'une élévation du châssis (16).

2. Chariot (1) à fourches (2) selon la revendication 1, **caractérisé en ce que** l'organe (11) d'obturation de la liaison (10) fluidique entre les conduites (C1, C2) est en position ouverte en mode de fonctionnement de manutention à l'état entraîné des fourches (2) dans le sens d'un abaissement des fourches (2).

3. Chariot (1) à fourches (2) selon l'une des revendications 1 ou 2, **caractérisé en ce que** l'une (8) des chambres (7, 8) dite chambre (8) d'abaissement des fourches (2) du ou de chaque vérin (4) de levage qui est configurée pour, en mode de fonctionnement de manutention, être alimentée en fluide à partir de l'autre chambre dite chambre (7) de levage des fourches (2) via la liaison (10) fluidique entre les conduites (C1, C2) à l'état entraîné des fourches (2) dans le sens d'un abaissement des fourches (2) forme, en mode de fonctionnement de transport, la chambre dudit vérin (4) de levage alimentée en fluide par la source (9) hydraulique à l'état entraîné du châssis (16) dans le sens d'un levage du châssis (16).

4. Chariot (1) à fourches (2) selon l'une des revendications 1 à 3, **caractérisé en ce que** l'une (7) des chambres (7, 8) dite chambre (7) de levage des fourches du ou de chaque vérin (4) de levage qui est configurée pour, en mode de fonctionnement de manutention, être alimentée en fluide à l'état entraîné des fourches (2) dans le sens d'un levage des fourches (2) forme, en mode de fonctionnement de transport, la chambre dudit vérin (4) de levage alimentée en fluide à l'état entraîné du châssis (16) dans le sens d'un abaissement du châssis (16).

5. Chariot (1) à fourches (2) selon l'une des revendications 1 à 4, **caractérisé en ce que** la liaison (10) fluidique entre les conduites (C1, C2) est disposée sur la portion des conduites (C1, C2) s'étendant entre le distributeur (93) et le vérin (4) de levage.

6. Chariot (1) à fourches (2) selon l'une des revendications 1 à 5, **caractérisé en ce que** la liaison (10) fluidique entres les conduites (C1, C2) est munie d'une ligne (12) de délestage équipée dans sa zone de raccordement à la liaison (10) fluidique d'une vanne (13) sensible à la pression apte à passer de la position fermée à la position ouverte de la ligne (12) de délestage en fonction de la pression régnant sur la liaison (10) fluidique entre les conduites (C1, C2).

7. Chariot (1) à fourches (2) selon l'une des revendications 1 à 6, **caractérisé en ce que** la conduite (C2) de circulation de fluide équipant la chambre (8) du vérin (4) de levage dite chambre d'abaissement des fourches (2) à l'échappement en mode de fonctionnement de manutention à l'état entraîné en déplacement des fourches (2) pour le passage des fourches d'une position basse à une position haute est munie d'un organe (14) de fermeture de la conduite (C2) sensible à la pression du fluide de la conduite (C1) de circulation de fluide de l'autre chambre (7) dite chambre de levage des fourches (2) du vérin (4) de levage, ledit organe (14) de fermeture étant configuré pour passer de la position fermée à la position ouverte de la conduite (C2) lorsque la pression sur la conduite (C1) de la chambre (7) de levage des fourches (2) du vérin (4) de levage est supérieure à une valeur prédéterminée.

8. Chariot (1) à fourches (2) selon la revendication 7, **caractérisé en ce que** l'organe (14) de fermeture de la conduite (C2) est monté en parallèle d'un clapet (15) anti-retour.

9. Chariot (1) à fourches (2) selon l'une des revendications 1 à 8, **caractérisé en ce que** l'organe (11) d'obturation de la liaison (10) fluidique entre les conduites (C1, C2) est un organe (11) d'obturation à commande (17) manuelle actionnable par le conducteur du chariot (1).

10. Chariot (1) à fourches (2) selon l'une des revendications 1 à 9, **caractérisé en ce que** l'organe (11) d'obturation de la liaison (10) fluidique entre les conduites (C1, C2) est une électrovalve de préférence normalement ouverte.

## Patentansprüche

1. Auf einem Trägerfahrzeug (20) montierter Wagen (1) mit Gabeln (2), wobei der Wagen (1) ein Fahrgestell (16), Gabeln (2) zur Handhabung von Last und die Kopplung des Wagens (1) an ein Trägerfahrzeug (20), Mittel (3) zur Verbindung der Gabeln (2) an das Fahrgestell (16), wobei die Mittel (3) zur Verbindung mindestens einen Hubzylinder (4) zum Antrieb und zur relativen Verschiebung der Gabeln (2) und des Fahrgestells (16) in Richtung einer Annäherung und einer Beabstandung zu- und voneinander, um, in einem Betriebsmodus, bezeichnet als Handhabung, in dem die Gabeln (2) frei in der Verschiebung nach oben und unten mit Bezug auf den Boden montiert sind, zu ermöglichen, eine Erhöhung der Gabeln (2) und, in einem Betriebsmodus, bezeichnet als Transport, in dem sich die Gabeln (2) in einer hohen Position befinden und in der Verschiebung nach oben und unten mit Bezug auf den Boden blockiert sind, eine Erhöhung des Fahrgestells (16) umfasst, wobei der oder jeder Hubzylinder (4) mindestens einen Körper (5) und eine Kolbenstange (6) umfasst, die den Körper (5) in zwei Kammern (7, 8) unterteilt, wobei dieser Hubzylinder (4) ein Hubzylinder mit doppeltem Effekt ist, wobei jede Kammer (7; 8) mit einer Fluidleitung (C1, C2) zur Verbindung der Kammer (7; 8) mit einer hydraulischen Quelle (9) ausgestattet ist, umfassend eine Pumpe (91) und einen Behälter (92) über einen Verteiler (93), um eine Versorgung mit Fluid der einen oder der anderen der Kammern (7, 8) zu ermöglichen, **dadurch gekennzeichnet**, das im Betriebsmodus, bezeichnet als Handhabung, die Gabeln (2) unter der Wirkung ihres Gewichts ein Mitnehmerelement zur Betätigung des oder jedes Hubzylinders (4) für den Übergang der Gabeln (2) aus der hohen in die niedrige Position bilden, und dadurch, dass bei jedem Hubzylinder (4) die Fluidleitungen (C1, C2) zur Verbindung der Kammern (7, 8) des Hubzylinders (4) mit der hydraulischen Quelle (9) durch ein fluidische Verbindung (10) miteinander verbunden sind, um eine Übertragung von Fluid von einer (7) der Kammern (7, 8) in Richtung auf die andere Kammer (8) des Zylinders zu ermöglichen, wobei diese fluidische Verbindung (10) mit einem Verschlussorgan (11) ausgestattet ist, das zwischen einer geschlossenen Position und einer offenen Position der fluidischen Verbindung (10) beweglich montiert ist, wobei dieses Verschlussorgan (11) in der geschlossenen Position mindestens im Betriebsmodus Transport im angetriebenen Zustand des Fahrgestells (16) in Richtung einer Erhebung des Fahrgestells (16) ist.

2. Wagen (1) mit Gabeln (2) nach Anspruch 1, **dadurch gekennzeichnet, dass** das Verschlussorgan (11) der fluidischen Verbindung (10) zwischen den Leitungen (C1, C2) in der offenen Position im Betriebsmodus Handhabung im angetriebenen Zustand der Gabeln (2) in Richtung eines Absenkens der Gabeln (2) ist.

3. Wagen (1) mit Gabeln (2) nach einem der Ansprüche 1 oder 2, **dadurch gekennzeichnet, dass** eine (8) der Kammern (7, 8), bezeichnet als Kammer (8) zum Absenken der Gabeln (2), des oder jedes Hubzylinders (4), die konfiguriert ist, um, im Betriebsmodus Handhabung, aus der anderen Kammer, bezeichnet als Kammer (7) zum Anheben der Gabeln (2), über die fluidische Verbindung (10) zwischen den Leitungen (C1, C2) versorgt zu werden, im angetriebenen Zustand der Gabeln (2) in Richtung eines Absenkens der Gabeln (2) im Betriebsmodus Transport die Kammer des Hubzylinders (4), versorgt mit Fluid durch die hydraulische Quelle (9), im angetriebenen Zustand des Fahrgestells (16) in Richtung eines Anhebens des Fahrgestells (16) bildet.

4. Wagen (1) mit Gabeln (2) nach einem der Ansprüche 1 bis 3, **dadurch gekennzeichnet, dass** eine (7) der Kammern (7, 8), bezeichnet als Kammer (7) zum Anheben der Gabeln (2) des oder jedes Hubzylinders (4), die konfiguriert ist, um, im Betriebsmodus Handhabung, im angetriebenen Zustand der Gabeln (2) in Richtung eines Anhebens der Gabeln (2) mit Fluid versorgt zu werden, im Betriebsmodus Transport die Kammer des Hubzylinders (4), versorgt mit Fluid, im angetriebenen Zustand des Fahrgestells (16) in Richtung eines Absenkens des Fahrgestells (16) bildet.

5. Wagen (1) mit Gabeln (2) nach einem der Ansprüche 1 bis 4, **dadurch gekennzeichnet, dass** die fluidische Verbindung (10) zwischen den Leitungen (C1, C2) auf dem Abschnitt der Leitungen (C1, C2) angeordnet ist, der sich zwischen dem Verteiler (93) und dem Hubzylinder (4) erstreckt.

6. Wagen (1) mit Gabeln (2) nach einem der Ansprüche 1 bis 5, **dadurch gekennzeichnet, dass** die fluidische Verbindung (10) zwischen den Leitungen (C1, C2) mit einer Entlastungslinie (12) versehen ist, ausgestattet in ihrem Anschlussbereich mit der fluidischen Verbindung (10) mit einem druckempfindlichen Ventil (13), das ausgelegt ist, um von der geschlossenen Position in die offene Position der Entlastungslinie (12) je nach dem Drück, der auf der fluidischen Verbindung (10) zwischen den Leitungen (C1, C2) herrscht, überzugehen.

7. Wagen (1) mit Gabeln (2) nach einem der Ansprüche 1 bis 6, **dadurch gekennzeichnet, dass** die Fluidzirkulationsleitung (C2), die die Kammer (8) des Hubzyklus (4), bezeichnet als Kammer zum Absenken der Gabeln (2), am Auspuff im Betriebsmodus Handhabung im angetriebenen Zustand zur Verschiebung der Gabeln (2) für den Übergang der Gabeln von einer niedrigen Position in eine hohe Position ausstattet, mit einem Verschlussorgan (14) der Leitung (C2) versehen ist, das empfindlich auf den Druck des Fluids der der Fluidzirkulationsleitung (C1) der anderen Kammer (7), bezeichnet als Kammer zum Anheben der Gabeln (2) des Hubzylinders (4) ist, wobei das Verschlussorgan (14) konfiguriert ist, um von der geschlossenen Position in die geöffnete Position der Leitung (C2) überzugehen, wenn der Druck auf der Leitung (C1) der Kammer (7) zum Anheben der Gabeln (2) des Hubzylinders (4) größer als ein vorbestimmter Wert ist.

8. Wagen (1) mit Gabeln (2) nach Anspruch 7, **dadurch gekennzeichnet, dass** das Verschlussorgan (14) der Leitung (C2) parallel zu einem Rückschlagventil (15) montiert ist.

9. Wagen (1) mit Gabeln (2) nach einem der Ansprüche 1 bis 8, **dadurch gekennzeichnet, dass** das Verschlussorgan (11) der fluidischen Verbindung (10) zwischen den Leitungen (C1, C2) ein Verschlussorgan (11) mit manueller Steuerung (17) ist, die durch den Fahrer des Wagens (1) betätigt werden kann.

10. Wagen (1) mit Gabeln (2) nach einem der Ansprüche 1 bis 9, **dadurch gekennzeichnet, dass** das Verschlussorgan (11) der fluidischen Verbindung (10) zwischen den Leitungen (C1, C2) ein Elektroventil ist, das bevorzugt normalerweise geöffnet ist.

## Claims

1. A forklift (2) truck (1) mounted on a carrier vehicle (20), said truck (1) comprising a frame (16), forks (2) for handling the load and coupling the truck (1) to a carrier vehicle (20), means (3) for connecting the forks (2) to the frame (16), said connection means (3) comprising at least one lifting jack (4) to drive the forks (2) and the frame (16) in relative displacement in the direction of approach towards one another and moving away from one another in order to permit raising of the forks (2) in a so-called handling operating mode, in which the forks (2) are mounted so as to be free in upward and downward displacement relative to the ground, and to permit raising of the frame (16) in a so-called transport operating mode, in which the forks (2) are in the high position and their upwards and downwards displacement relative to the ground is immobilized, the or each lifting jack (4) comprising at least one body (5) and a piston rod (6) dividing the body (5) into two chambers (7, 8), this lifting jack (4) being a double-effect lifting jack, each chamber (7; 8) of which is equipped with a fluid duct (C1, C2) for connection of the chamber (7; 8) to a hydraulic source (9) comprising a pump (91) and a reservoir (92) via a distributor (93) to permit supply of fluid to one or the other of the chambers (7, 8), **characterized in that**, in the so-called handling operating mode, under the effect of their weight, the forks (2) form a driving element for actuation of the or each lifting jack (4) for the passage of the forks (2) from the high position to the low position, and **in that**, for the or each lifting jack (4), the fluid ducts (C1, C2) for connection of the chambers (7, 8) of the lifting jack (4) to the hydraulic source (9) are connected to one another by a fluid connection (10), in order to permit a transfer of fluid from one (7) of the chambers (7, 8) in the direction of the other chamber (8) of the jack, this fluid connection (10) being equipped with a closing member (11) that is mounted so as to be mobile between a closed position and an open position of the fluid connection (10), this closing member (11) being in the closed position at least in the transport operating mode, in the state in which the frame (16) is driven in the direction of raising of the frame (16).

2. The forklift (2) truck (1) according to claim 1, **characterized in that** the member (11) for closing the fluid connection (10) between the ducts (C1, C2) is in the open position in the handling operating mode, in the state in which the forks (2) are driven in the direction of lowering of the forks (2).

3. The forklift (2) truck (1) according to one of claims 1 or 2, **characterized in that** one (8) of the chambers (7, 8), called the chamber (8) for lowering the forks (2) of the or each lifting jack (4), which chamber is configured, in the handling operating mode, to be supplied with fluid from the other chamber, called the chamber (7) for lifting the forks (2) via the fluid connection (10) between the ducts (C1, C2) in the state in which the forks (2) are driven in the direction of lowering of the forks (2), in the transport operating mode forms the chamber of said lifting jack (4) that is supplied with fluid by the hydraulic source (9) in the state in which the frame (16) is driven in the direction of lifting of the frame (16).

4. The forklift (2) truck (1) according to one of claims 1 to 3, **characterized in that** one (7) of the chambers (7, 8), called the chamber (7) for lifting the forks of the or each lifting jack (4), which chamber is configured, in the handling operating mode, to be supplied with fluid in the state in which the forks (2) are driven in the direction of lifting of the forks (2), in the transport operating mode forms the chamber of said lifting jack (4) that is supplied with fluid in the state in which the frame (16) is driven in the direction of lowering of the frame (16).

5. The forklift (2) truck (1) according to one of claims 1 to 4, **characterized in that** the fluid connection (10) between the ducts (C1, C2) is placed on the portion of the ducts (C1, C2) that extends between the distributor (93) and the lifting jack (4).

6. The forklift (2) truck (1) according to one of claims 1 to 5, **characterized in that** the fluid connection (10) between the ducts (C1, C2) is provided with an offloading line (12) that is equipped in its area of connection to the fluid connection (10) with a pressure-sensitive valve (13) that can go from the closed position to the open position of the offloading line (12) according to the pressure that exists at the fluid connection (10) between the ducts (C1, C2).

7. The forklift (2) truck (1) according to one of claims 1 to 6, **characterized in that** the fluid circulation duct (C2) that equips the chamber (8) of the lifting jack (4) called the chamber for lowering the forks (2) at discharge, in the handling operating mode in the state in which the forks (2) are driven in displacement for the passage of the forks from a low position to a high position, is provided with a member (14) for closing the duct (C2), which member is sensitive to the pressure of the fluid of the fluid circulation duct (C1) of the other chamber (7), called the lifting chamber, of the forks (2) of the lifting jack (4), said closing member (14) being configured to go from the closed position to the open position of the duct (C2), when the pressure on the duct (C1) of the lifting chamber (7) of the forks (2) of the lifting jack (4) is greater than a predetermined value.

8. The forklift (2) truck (1) according to claim 7, **characterized in that** the member (14) for closing the duct (C2) is mounted in parallel with a non-return valve (15).

9. The forklift (2) truck (1) according to one of claims 1 to 8, **characterized in that** the member (11) for closing the fluid connection (10) between the ducts (C1, C2) is a closing member (11) with manual control (17) that can be actuated by the driver of the truck (1).

10. The forklift (2) truck (1) according to one of claims 1 to 9, **characterized in that** the member (11) for closing the fluid connection (10) between the ducts (C1, C2) is a solenoid valve that is normally preferably open.
